# EUROPEAN PATENT SPECIFICATION

(11) **EP 0 390 484 B1**
(45) Date of publication and mention of the grant of the patent: **29.09.1993**
(21) Application number: 90303232.4
(22) Date of filing: 27.03.1990
(51) Int. Cl.: B65G 19/30, B65G 19/20

(54) **Horizontal rotary transfer apparatus**
Horizontale rotierende Übergabevorrichtung
Appareil de transfert horizontal rotatif

(30) Priority: 31.03.1989 JP 36386/89 U
(43) Date of publication of application: 03.10.1990
(73) Proprietor: OKAMURA CORPORATION, Yokohama-shi Kanagawa-ken (JP)
(72) Inventor: Mitsumoto, Takayasu, Yokosuka-shi, Kanagawa-ken (JP)
(74) Representative: Geldard, David Guthrie

(56) References cited:
- DE-A- 3 525 001
- FR-A- 1 406 399
- FR-A- 2 533 198

## Description

The present invention relates to a horizontal rotary transfer apparatus in which an endless linked belt is horizontally rotated so that loaded material such as pallets may be transferred.

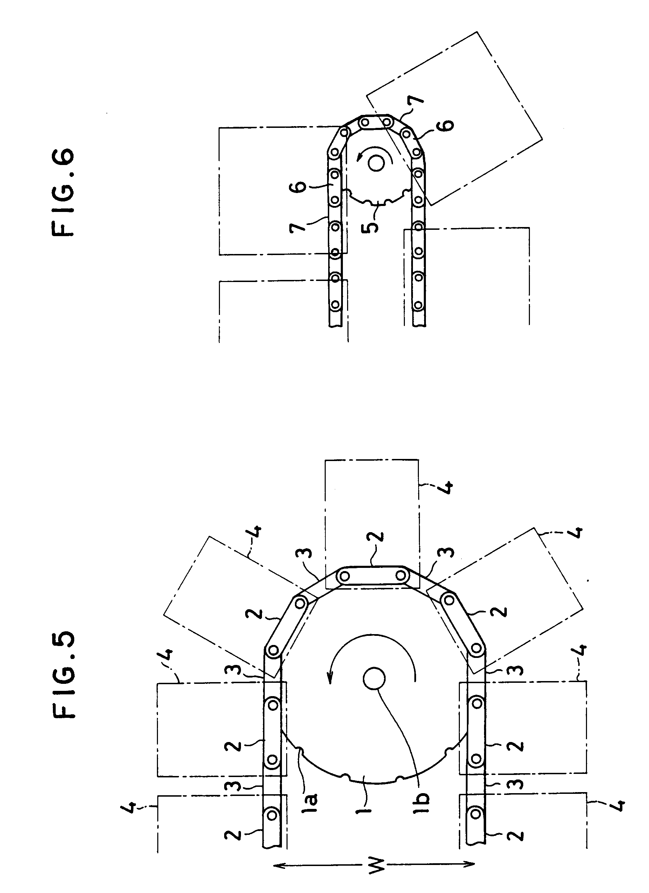

For example, there is a known horizontal rotatable transfer apparatus which comprises an endless belt as mentioned in Japanese Utility Model Pub No 56-49942, the apparatus being shown in Figure 5.

In the known apparatus, there is a pair of circular rotary plates around which cut-out portions are provided at regular intervals, each rotary plate being rotatably mounted around a vertical shaft. A linked belt in which a plurality of holding links and connecting links are alternately connected is passed around the pair of circular rotary plates and is driven by suitable power means, so that material on the holding link is horizontally transferred.

However, in the known apparatus the distance between parallel runs of the linked belt is substantially the same as the diameter of each circular rotary plate, which brings about a useless wide space between the two runs.

To decrease the distance between the two runs, if the diameter of the circular rotary plate becomes smaller, it is necessary to shorten the length of the links so as to match the size of the circular rotary plate, which causes unstable transporting of loaded material.

French patent application FR-A-2533198 discloses a goods handling equipment comprising a gangway positioned between two sets of circulating shelves. The gangway comprises two parallel roller conveyors for goods travelling in opposite directions, and between the two conveyors is a travelling mast. The mast is cylindrical and carries a rotary unit with a lifting system and with a support for a load carrier mounted on rollers, so that it can be extended and retracted horizontally.

Each tear of shelves uses a circulating conveyor with chains travelling horizontally around a circuit, so that goods can be transferred between opposite sides and to the ends of the shelves, and also transferred to the lifting system of the mast end. The goods conveyors carry rollers which travel against horizontal guides, and also have flange tops so that they can fit over connecting elements on the circulating conveyors and on the load carrier on the mast.

According to the present invention there is provided a horizontal rotary transfer apparatus, comprising:
an endless linked belt in which a plurality of holding and connecting links are alternately connected via joints to form an endless belt so that loaded material engaged by the holding links may be transferred; and
a pair of polygonal plates spaced at a distance one from the other, the plates being rotatable about parallel axes each perpendicular to the plane of the respective plate, the polygonal plates being rotated synchronously and in engagement with the links, and the length of any side of each polygonal plate being equal to a major part of the length of each link that is engaged by that side of that plate, as disclosed by FR-A-2 533 198 and characterised in that at each end of the holding link there is a holding member the transferred material being locatable between the holding members. Each rotary plate is polygonal, whereby rotary plates smaller in size than the known circular rotary plates can drive an endless belt having a larger link length smoothly and reliably.

The invention and its advantages will become more apparent from the following description with respect to the appended drawings, wherein:
Figure 1 is a schematic plan view of a first embodiment according to the present invention;

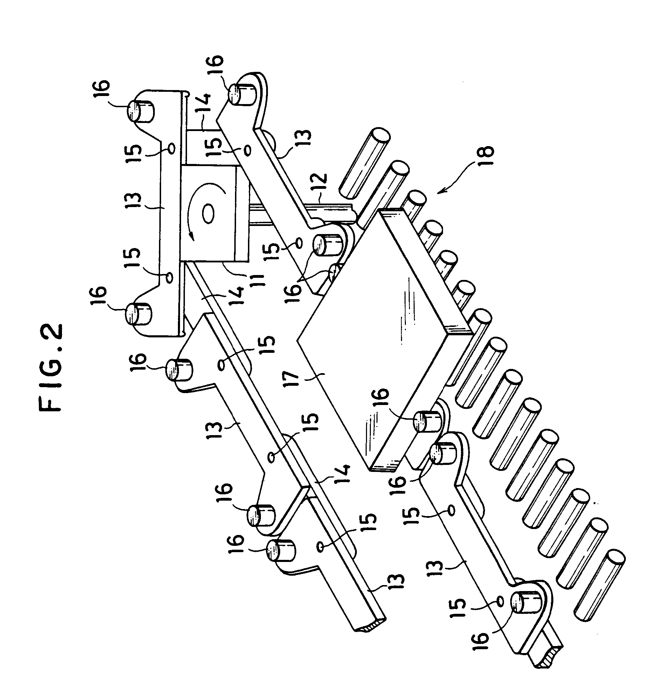

Figure 2 is a perspective view of the main part thereof;
Figure 3 is a schematic plan view which shows a second embodiment of the present invention;
Figure 4 is a schematic plan view of a third embodiment of the present invention; and
Figures 5 and 6 are plan views of different known apparatus respectively.

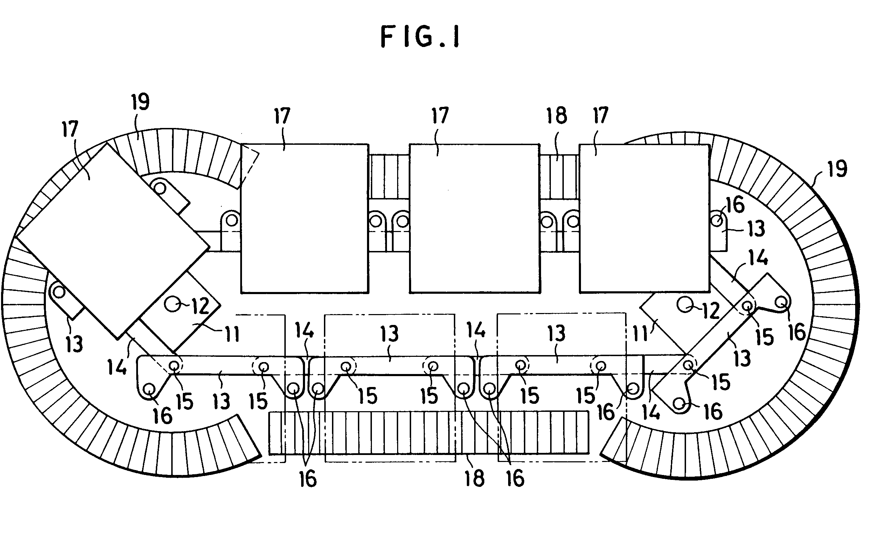

As shown in Figure 1, there is provided a pair of square rotary plates 11, each of which is rotatably mounted around a vertical shaft 12. Around the pair of square rotary plates 11, there is an endless belt in which a plurality of holding and connecting links 13 and 14 are alternatively connected via joints 15.

The distance between the joints 15 corresponds to the side length of the square rotary plate, the major part of which is engaged with the insides of the links 13 and 14. The pair of rotary plates 11 is synchronously rotated so that the endless belt may be driven. Each end of the holding link 13 extends outwardly to form a pair of holding members 16 that may include urethane rollers.

Transferred material such as a pallet, a container or a tray is held between the pair of holding members 16 on the holding link 13 and is transported along the endless linked belt. In this embodiment, to support the transport the material 17 reliably, there is provided a row of guide rollers 18 along the straight run of the endless belt, and a curved conveyor 19 along the curved run at the both ends of the belt.

In an alternative embodiment, rotation of the pair of square rotary plates 11 as shown allows the endless linked belt to run, but instead of the guide rollers 18, transportation means such as a slat conveyor may transfer the material 17.

In the embodiment of Figure 1, the endless linked belt is driven around the square rotary plate 11 which has a side length equal to the distance between the joints 15 less the width of the links, whereby it can be driven and rotated by a rotary plate having a size smaller than a circular rotary plate in a known apparatus though the distance is the same. Thus, the distance between the parallel runs of the belt is shortened compared with a known apparatus, so that a surrounded space becomes smaller than that in the known apparatus, thereby decreasing installation space.

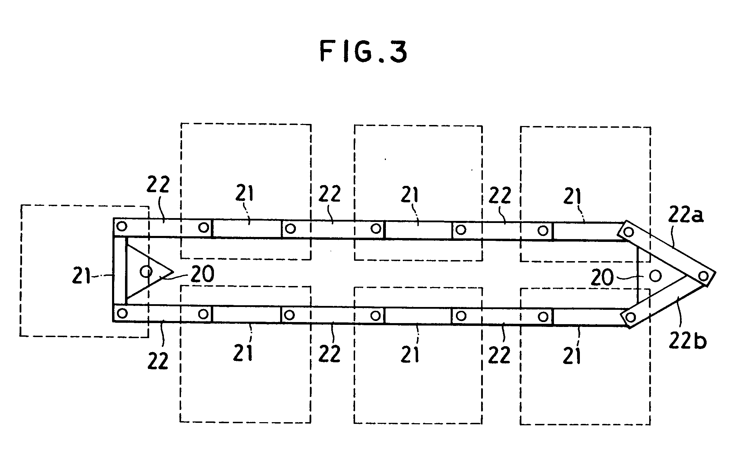

In the above embodiment, the rotary plate is square, but it may be of other polygonal form. Figure 3 is a schematic plan view of a second embodiment in which the rotary plates each comprise a regular triangle, the plates being synchronously rotated as in the first embodiment.

The endless linked belt comprises a plurality of alternate holding links 21 and connecting links 22, but at one position only the connecting links 22a and 22b are directly connected to each other without an intermediate holding link. This is because a pair of synchronously driven triangular rotary plates 20 allows an odd number of the links which constitute the endless linked belt.

To allow an even number of the links, if one of the rotary plates 20 were to be located in an opposite direction to the other, ie, in a shape which rotates at 180°, rotation of the plate 20 would vary the distance between sections of the rotary plates that contact the links, so periodically increasing and decreasing tension in the links of the straight runs, thereby loosening the belt, which does not allow smooth running. The odd number of the links shown in Figure 3 assures smooth running.

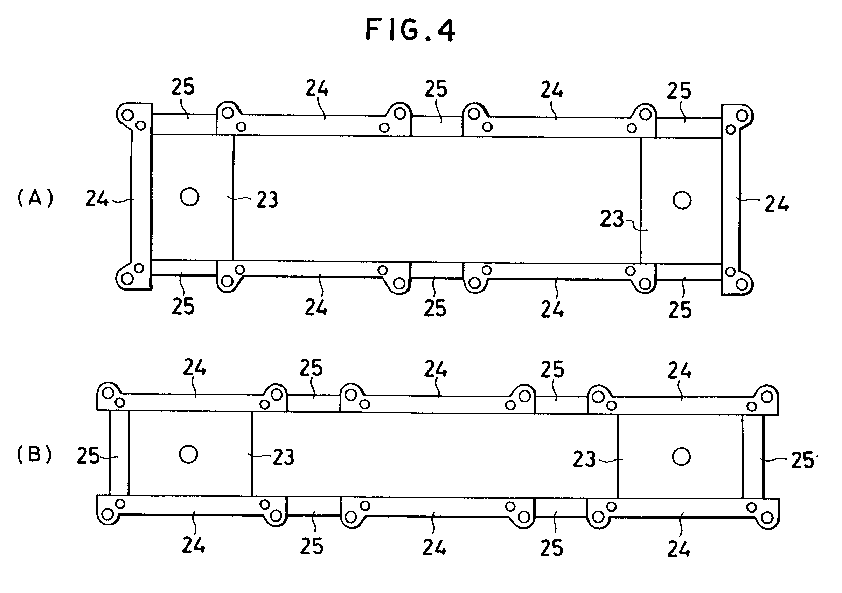

Figure 4 is a schematic plan view of a third embodiment in which each rotary plate comprises a rectangle. In this embodiment, a holding link 24 in an endless linked belt is longer than a connecting link 25. The longer side of a rectangular rotary plate 23 is equal in length to a major part of the length of the holding link 24, while the shorter side is equal in length to a major part of the length of the connecting link 25.

Figure 4 (A) illustrates the position that the longer side of the pair of rectangular rotary plate 23 is located perpendicular to the longitudinal direction of the apparatus, while (B) illustrates the position that is rotated through 90° therefrom. In this embodiment, the pair of rotary plates 23 is synchronously rotated, which assures smooth running of the endless linked belt.

In Figure 4, the holding link 24 is longer than the connecting link 25 and is corresponding to the longer side of the rotary plate 23. Alternatively, the connecting link 25 may be longer than the link 24. To keep the transferred material stable, however, the length of the holding link 24 may preferably be larger; so it is preferable to constitute the structure, as shown, that the holding link 24 is engaged with the longer side of the rectangular rotary plate 23.

In the above embodiments, if desired, a plurality of belts may be vertically stacked to construct a multiple layered apparatus, in which each layer of the transfer apparatus may be simultaneously driven and rotated, or each layer may be independently driven.

In the above embodiments, material which is put between the holding members is transported, but the present invention is also applicable to a transfer apparatus in which a holder for loaded material such as a pallet is provided on a holding link.

The horizontal rotary transfer apparatus according to the present invention allows a reduced centre space, decreasing installation space.

## Claims

1. A horizontal rotary transfer apparatus, comprising:
an endless linked belt in which a plurality of holding (13; 32; 24) and connecting (14; 21; 25) links are alternately connected via joints (15) to form an endless belt so that loaded material (17) engaged by the holding links may be transferred; and
a pair of polygonal plates (11; 20; 23) spaced at a distance one from the other, the plates being rotatable about parallel axes (12) each substantially perpendicular to the plane of the respective plate, the polygonal plates being rotated synchronously and in engagement with the links, and the length of any side of each polygonal plate being equal to a major part of the length of each link that is engaged by that side of that plate, characterised in that, at each end of the holding link there is a holding member (16) the transferred material (17) being locatable between the holding members.

2. Apparatus as claimed in claim 1 wherein the polygonal plate (11) is square.

3. Apparatus as claimed in claim 1 wherein the polygonal plate (20) is a regular triangle.

4. Apparatus as claimed in claim 1 wherein the polygonal plate (23) is rectangular.

## Patentansprüche

1. Horizontale umlaufende Übergabevorrichtung, umfassend:
einen endlosen Gliedergurt, wobei eine Mehrzahl von Haltegliedern (13; 32; 24) und Verbindungsgliedern (14; 21; 25) abwechselnd mittels Gelenken (15) miteinander verbunden sind, einen endlosen Gurt zu bilden, so daß aufgegebenes Material (17), das von den Haltegliedern erfaßt wird, überführt werden kann; und ein Paar polygonaler Platten (11; 20; 23), die in einem gegenseitigen Abstand angeordnet sind, die um parallele Achsen (12) drehbar sind, deren jede senkrecht zur Ebene der betreffenden Platte verläuft, und die synchron und im Eingriff mit den Gliedern angetrieben sind, wobei die Länge irgendeiner Seite einer jeden polygonalen Platte gleich einem größeren Teil der Länge eines jeden Gliedes ist, das von jener Seite dieser Platte erfaßt wird,
dadurch gekennzeichnet, daß an jedem Ende des Haltegliedes ein Halteelement (16) vorgesehen ist,
wobei das zu überführende Material (17) zwischen den Halteelementen plazierbar ist.

2. Vorrichtung nach Anspruch 1, wobei die polygonale Platte (11) quadratisch ist.

3. Vorrichtung nach Anspruch 1, wobei die polygonale Platte (20) ein gleichseitiges Dreieck ist.

4. Vorrichtung nach Anspruch 1, wobei die polygonale Platte (23) rechteckig ist.

## Revendications

1. Un appareil de transfert rotatif horizontal comprenant une bande sans fin articulee dans laquelle une pluralité de maillons de support (13; 32; 24) et de liaison (14; 21; 25) sont reliés alternativement par des articulations (15) pour former une bande sans fin de sorte que le matériau chargé (17) pris en charge par les maillons de support puisse être transféré; et une paire de plaques polygonales (11; 20; 23) espacées l'une de l'autre, les plaques pouvant tourner autour d'axes parallèles (12) chacun étant pratiquement perpendiculaire au plan de la plaque respective, les plaques polygonales étant mises en rotation de façon synchrone, et en prise avec les maillons, et la longueur de tout côté de chaque plaque polygonale étant égale à la majeure partie de la longueur de chaque maillon qui se trouve en prise par ce côté de cette plaque, caractérisé en ce qu'à chaque extrémité du maillon de support, il y a un élément porteur (16), le matériau transporté (17) pouvant être placé entre les éléments de support.

2. Appareil tel que revendiqué dans la revendication 1, dans lequel la plaque polygonale (11) est carrée.

3. Appareil tel que revendiqué dans la revendication 1, dans lequel la plaque polygonale (20) est un triangle équilatéral.

4. Appareil tel que revendiqué dans la revendication 1, dans lequel la plaque polygonale (23) est rectangulaire.
